(19)

Europäisches
Patentamt
European
Patent Office
Office européen
des brevets

(11) **EP 4 718 883 A1**

(12) **EUROPEAN PATENT APPLICATION**

(43) Date of publication:
**01.04.2026 Bulletin 2026/14**

(21) Application number: **25204373.2**

(22) Date of filing: **24.09.2025**

(51) International Patent Classification (IPC):
*H04W 4/02* (2018.01)      *H04W 4/70* (2018.01)
*H04W 4/90* (2018.01)      *H04W 84/06* (2009.01)

(52) Cooperative Patent Classification (CPC):
**H04W 4/90; H04W 4/02; H04W 4/70;** H04W 84/06

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **26.09.2024   KR 20240131174
05.09.2025   KR 20250126771**

(71) Applicant: **KT Corporation
Seongnam-si, Gyeonggi-do 13606 (KR)**

(72) Inventor: **HONG, Sung-pyo
13606 Seongnam-si, Gyeonggi-do (KR)**

(74) Representative: **BCKIP Part mbB
Landsberger Straße 98
80339 München (DE)**

(54) **METHOD AND APPARATUS FOR RECEIVING NOTIFICATION INFORMATION**

(57)     Provided are a method and apparatus for receiving notification information in a wireless communication system. The terminal may receive a Narrowband-Internet of Things (NB-IoT) system information block type1. Then, after receiving the NB-IoT system information block type1, the terminal may receive at least one specific NB-IoT system information block type including Earthquake and Tsunami Warning System (ETWS) notification information. Subsequently, the terminal may forward at least a part of the ETWS notification information to an upper layer, wherein the ETWS notification information may include warning area coordinates information.

EP 4 718 883 A1

**Description**

CROSS-REFERENCE TO RELATED THE APPLICATION

This application is based on and claims priority on Patent Application No. 10-2024-0131174 filed on Sep. 26, 2024 and No. 10-2025-0126771 filed on Sep. 5, 2025 in the Korean Intellectual Property Office.

BACKGROUND

Technical Field

The present disclosure relates to wireless communication applicable to 4G LTE, 5G NR, 5G-Advanced and 6G.

Description of the Related Art

With the increase in the number of communication devices, there is a corresponding rise in communication traffic that must be managed. To handle this increased communication traffic, a next generation 5G system, which is an enhanced mobile broadband communication system compared to the existing LTE system, has become essential. Such a next generation 5G system has been designed based on scenarios which are classified into Enhanced Mobile BroadBand (eMBB), Ultra-reliable and low-latency communication (URLLC), Massive Machine-Type Communications (mMTC), and more.

eMBB, URLLC, and mMTC represent next generation mobile communication scenarios. eMBB is characterized by high spectral efficiency, high user experience data rate, and high peak data rate. URLLC is characterized by ultra-reliability, ultra-low latency, and ultra-high availability (e.g., vehicle-to-everything (V2X), Emergency Service, and Remote Control). mMTC is characterized by low cost, low energy consumption, short packet transmission, and massive connectivity (e.g., Internet of Things (IoT)).

SUMMARY

The disclosure is to provide a method and apparatus for receiving notification information by an Non-Terrestrial Network (NTN)-based NB-IoT (Narrowband-Internet of Things) terminal in a wireless communication system.

According to an embodiment, a method of a terminal may be provided for operating in a wireless communication system. The method may include i) receiving an NB-IoT system information block type1, ii) after receiving the NB-IoT system information block type1, receiving at least one specific NB-IoT system information block type including Earthquake and Tsunami Warning System (ETWS) notification information, and iii) forwarding at least a part of the ETWS notification information to an upper layer, wherein the ETWS notification information may include warning area coordinates information.

According to another embodiment, a Narrowband-Internet of Things (NB-IoT) terminal may be provided for operating in a wireless communication system. The NB-IoT terminal may include at least one processor; and at least one memory configured to store instructions and operably electrically connectable to the at least one processor, wherein operations performed based on the instructions executed by the at least one processor include: i) receiving an NB-IoT system information block type1, ii) after receiving the NB-IoT system information block type1, receiving at least one specific NB-IoT system information block type including Earthquake and Tsunami Warning System (ETWS) notification information, and iii) forwarding at least a part of the ETWS notification information to an upper layer, wherein the ETWS notification information may include warning area coordinates information.

The at least one specific NB-IoT system information block type may include a first NB-IoT specific system information block type for an ETWS primary notification and a second NB-IoT specific system information block type for an ETWS secondary notification.

Meanwhile, terminal capability information associated with the reception of the ETWS notification information may be indicated to a network, wherein the terminal capability information may include support for Non-Terrestrial Network (NTN) access. And/or, the terminal capability information may be defined as information distinguished from an optional feature without a terminal radio access capability parameter.

The NB-IoT system information block type1 may include scheduling information indicating that the at least one specific NB-IoT system information block type is present, wherein the terminal may, based on the scheduling information, immediately start acquisition of at least one of the first NB-IoT specific system information block type and the second NB-IoT specific system information block type.

When the warning area coordinates information corresponds to a warning area coordinates segment included in the second NB-IoT specific system information block type, the warning area coordinates segment may be used for assembly. When complete warning area coordinates are not assembled within a 3-hour period, the warning area coordinates segment may be discarded.

BRIEF DESCRIPTION OF THE DRAWINGS

FIG. 1 is a diagram illustrating a wireless communication system.
FIG. 2 is a diagram illustrating a structure of a radio frame used in new radio (NR).
FIGS. 3A to 3C illustrate exemplary architectures for a wireless communication service.
FIG. 4 illustrates a slot structure of an NR frame.
FIG. 5 shows an example of a subframe type in NR.
FIG. 6 illustrates a structure of a self-contained slot.
FIG. 7 illustrates an example of an Internet of Things (IoT) Non-Terrestrial Network (NTN) architecture.
FIG. 8 is a flowchart for an operation method of a terminal according to an embodiment of the disclosure.
FIG. 9 is a block diagram showing apparatuses according to an embodiment of the disclosure.
FIG. 10 is a block diagram showing a terminal according to an embodiment of the disclosure.
FIG. 11 is a block diagram of a processor in accordance with an embodiment.
FIG. 12 is a detailed block diagram of a transceiver of a first apparatus shown in FIG. 9 or a transceiving unit of an apparatus shown in FIG. 10.

DETAILED DESCRIPTION

The technical terms used in this document are merely for describing specific embodiments and should not be considered to limit the scope of the embodiments of the disclosure. Unless otherwise defined, the technical terms used in this document should be interpreted as commonly understood by those skilled in the art, without being construed too broadly or too narrowly. If any technical terms used do not precisely convey the intended meaning of the disclosure, they should be replaced with or interpreted as technical terms that are accurately understood and recognized by those skilled in the art. The general terms used in this document should be interpreted according to their dictionary definitions, without overly narrow interpretations.

The singular form used in the disclosure includes the plural unless the context dictates otherwise. The term 'include' or 'have' may represent the presence of features, numbers, steps, operations, components, parts or the combination thereof described in the disclosure. The term 'include' or 'have' may not exclude the presence or addition of another feature, another number, another step, another operation, another component, another part or the combination thereof.

The terms 'first' and 'second' are used to describe various components without limiting them to these specific terms. The terms 'first' and 'second' are only used to distinguish one component from another component. For example, a first component may be named as a second component without departing from the scope of the disclosure.

When an element or layer is referred to as being "connected to" or "coupled to" another element or layer, it may be directly connected or coupled to the other element or layer, there might be intervening elements or layers. In contrast, when an element or layer is referred to as being "directly connected to" or "directly coupled to" another element or layer, there are no intervening elements or layers.

Hereinafter, the exemplary embodiments of the disclosure will be described in detail with reference to the accompanying drawings. In describing the disclosure, for ease of understanding, the same reference numerals will be used throughout the drawings for the same components, and repetitive description on these components will be omitted. Detailed description on well-known arts that may obscure the essence of the disclosure will be omitted. The accompanying drawings are provided to merely facilitate understanding of the embodiment of disclosure and should not be seen as limiting. It should be recognized that the essence of this disclosure extends the illustrations, encompassing, replacements or equivalents in variations of what is shown in the drawings.

In this disclosure, "A or B" may mean "only A", "only B", or "both A and B". In other words, "A or B" in the disclosure may be interpreted as "A and/or B". For example, "A, B or C" may mean "only A", "only B", "only C", or "any combination of A, B and C".

In this disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In this disclosure, "at least one of A and B" may mean "only A", "only B" or "both A and B". In addition, "at least one of A or B" or "at least one of A and/or B" may be interpreted as the same as "at least one of A and B".

In addition, "at least one of A, B and C" may mean "only A", "only B", "only C", or "any combination of A, B and C". Further, "at least one of A, B or C" or "at least one of A, B and/or C" may mean "at least one of A, B and C".

Also, parentheses used in this disclosure may mean "for example". For example, "control information (PDCCH)" may mean that "PDCCH" is an example of "control information". However, "control information" in this disclosure is not limited to "PDCCH". As another example, "control information (i.e., PDCCH)", may also mean that "PDCCH" is an example of "control information".

Each of the technical features described in one drawing in this disclosure may be implemented independently or simultaneously.

In the accompanying drawings, user equipment (UE) is illustrated as an example and may be referred to as a terminal, mobile equipment (ME), and the like. UE may be a portable device such as a laptop computer, a mobile phone, a personal digital assistance (PDA), a smart phone, a multimedia device, or the like. UE may be a non-portable device such as a personal computer (PC) or a vehicle-mounted device.

Hereinafter, the UE may be as an example of a device capable of wireless communication. The UE may be referred to as a wireless communication device, a wireless device, or a wireless apparatus. The operation performed by the UE may be applicable to any device capable of wireless communication. A device capable of wireless communication may also be referred to as a radio communication device, a wireless device, or a wireless apparatus.

A base station generally refers to a fixed station that communicates with a wireless device. The base station may include an evolved-NodeB (eNodeB), an evolved-NodeB (eNB), a BTS (Base Transceiver System), an access point (Access Point), gNB (Next generation NodeB), RRH(remote radio head), TP(transmission point), RP(reception point), and the repeater(relay).

While embodiments of the disclosure are described based on a long term evolution (LTE) system, an LTE-advanced (LTE-A) system, and a new radio (NR) system, such embodiments may be applicable to any communication system that fits the described criteria.

### <Wireless Communication System>

With the success of long-term evolution (LTE)/LTE-A (LTE-Advanced) for the 4th generation mobile communication, the next generation mobile communication (e.g., 5th generation: also known as 5G mobile communication) has been commercialized and the follow-up studies are also ongoing.

The 5th generation mobile communications, as defined by the International Telecommunication Union (ITU), provide a data transmission rate of up to 20 Gbps and a minimum actual transmission rate of at least 100 Mbps anywhere. The official name of the 5th generation mobile telecommunications is 'IMT-2020'.

ITU proposes three usage scenarios: enhanced Mobile Broadband (eMBB), massive Machine Type Communication (mMTC) and Ultra Reliable and Low Latency Communications (URLLC).

URLLC is a usage scenario requiring high reliability and low latency. For example, services such as automatic driving, factory automation, augmented reality require high reliability and low latency (e.g., a delay time of less than 1 ms). The delay time of current 4G (e.g., LTE) is statistically about 21 to 43 ms (best 10%) and about 33 to 75 ms (median), which insufficient to support services requiring a delay time of about 1 ms or less. Meanwhile, eMBB is a usage scenario that requires ultra-wideband mobile data transmission.

That is, the 5G mobile communication system offers a higher capacity compared to current 4G LTE. The 5G mobile communication system may be designed to increase the density of mobile broadband users and support device to device (D2D), high stability, and machine type communication (MTC). 5G research and development focus on achieving lower latency times and lower battery consumption compared to 4G mobile communication systems, enhancing the implementation of the Internet of things (IoTs). A new radio access technology, known as new RAT or NR, may be introduced for such 5G mobile communication.

An NR frequency band is defined to include two frequency ranges FR1 and FR2. Table 1 below shows an example of the two frequency ranges FR1 and FR2. However, the numerical values associated with each frequency range may be subject to change, and the embodiments are not limited thereto. For convenience of description, FR1 in the NR system may refer to a Sub-6 GHz range, and FR2 may refer to an above-6 GHz range, which may be called millimeter waves (mmWs).

[Table 1]

| Frequency Range designation | Corresponding frequency range | Subcarrier Spacing |
| --- | --- | --- |
| FR1 | 410MHz - 7125MHz | 15, 30, 60kHz |
| FR2 | 24250MHz - 52600MHz | 60, 120, 240kHz |

The numerical values of the frequency ranges may be subject to change in the NR system. For example, FR1 may range from about 410 MHz to 7125 MHz as listed in [Table 1]. That is, FR1 may include a frequency band of 6 GHz (or 5850, 5900, and 5925 MHz) or higher. For example, the frequency band of 6 GHz (or 5850, 5900, and 5925 MHz) or higher may include an unlicensed band. The unlicensed band may be used for various purposes, for example, vehicle communication (e.g., autonomous driving).

The 3GPP communication standards define downlink (DL) physical channels and DL physical signals. DL physical channels are related to resource elements (REs) that convey information from a higher layer while DL physical signals, used in the physical layer, correspond to REs that do not carry information from a higher layer. For example, DL physical channels include physical downlink shared channel (PDSCH), physical broadcast channel (PBCH), physical multicast channel (PMCH), physical control format indicator channel (PCFICH), physical downlink control channel (PDCCH), and physical hybrid ARQ indicator channel (PHICH). DL physical signals include reference signals (RSs) and synchronization signals (SSs). A reference signal (RS) is also known as a pilot signal and has a predefined special waveform known to both a gNode B (gNB) and a UE. For example, DL RSs include cell specific RS, UE-specific RS (UE-RS), positioning RS (PRS), and channel state information RS (CSI-RS). The 3GPP LTE/LTE-A standards also define uplink (UL) physical channels and UL physical signals. UL channels correspond to REs with information from a higher layer. UL physical signals are used in the physical layer and correspond to REs which do not carry information from a higher layer. For example, UL physical channels include physical uplink shared channel (PUSCH), physical uplink control channel (PUCCH), and physical random access channel (PRACH). UL physical signals include a demodulation reference signal (DMRS) for a UL control/data signal, and a sounding reference signal (SRS) used for UL channel measurement.

In this disclosure, PDCCH/PCFICH/PHICH/PDSCH refers to a set of time-frequency resources or a set of REs carrying downlink control information (DCI)/a control format indicator (CFI)/a DL acknowledgement/negative acknowledgement (ACK/NACK)/DL data. Further, PUCCH/PUSCH/PRACH refers to a set of time-frequency resources or a set of REs carrying UL control information (UCI)/UL data/a random access signal.

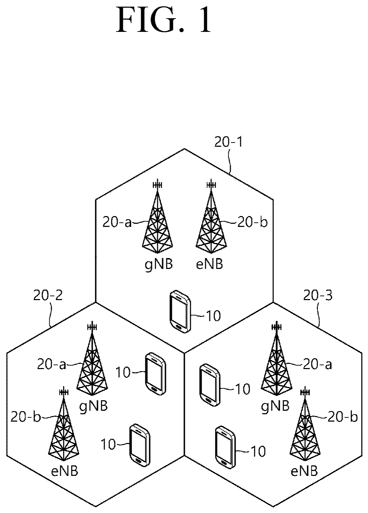

FIG. 1 is a diagram illustrating a wireless communication system.

Referring to FIG. 1, the wireless communication system may include at least one base station (BS). For example, the BSs may include a gNodeB (or gNB) 20a and an eNodeB (or eNB) 20b. The gNB 20a supports 5G mobile communication. The eNB 20b supports 4G mobile communication, that is, long term evolution (LTE).

Each BS 20a and 20b provides a communication service for a specific geographic area (commonly referred to as a cell) (20-1, 20-2, 20-3). The cell may also be divided into a plurality of areas (referred to as sectors).

A user equipment (UE) typically belongs to one cell, and the cell to which the UE belongs is called a serving cell. A base station providing a communication service to a serving cell is referred to as a serving base station (serving BS). Since the wireless communication system is a cellular system, there are other cells adjacent to the serving cell. The other cell adjacent to the serving cell is referred to as a neighbor cell. A base station that provides a communication service to a neighboring cell is referred to as a neighbor BS. The serving cell and the neighboring cell are relatively determined based on the UE.

Hereinafter, downlink means communication from the base station 20 to the UE 10, and uplink means communication from the UE 10 to the base station 20. In the downlink, a transmitter may be a part of the base station 20, and a receiver may be a part of the UE 10. In the uplink, the transmitter may be a part of the UE 10, and the receiver may be a part of the base station 20.

In a wireless communication system, there are primarily two schemes: frequency division duplex (FDD) scheme and time division duplex (TDD) scheme. In the FDD scheme, uplink transmission and downlink transmission occur on different frequency bands. Conversely, the TDD scheme allows both uplink transmission and downlink transmission to use the same frequency band, but at different times. A key characteristic of the TDD scheme is the substantial reciprocity of the channel response, meaning that the downlink channel response and the uplink channel response are almost identical within a given frequency domain. This reciprocity in TDD-based radio communication systems enables the estimation of the downlink channel response from the uplink channel response. In the TDD scheme, since uplink transmission and downlink transmission are time-divided in the entire frequency band, it is not possible to simultaneously perform downlink transmission by the base station and uplink transmission by the UE. In a TDD system where uplink transmission and downlink transmission are divided into subframe units, uplink transmission and downlink transmission are performed in different subframes.

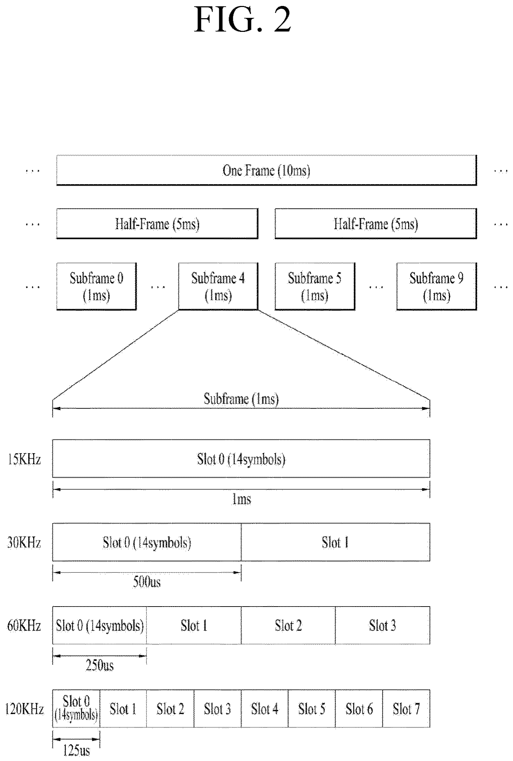

FIG. 2 is a diagram illustrating a structure of a radio frame used in new radio (NR).

In NR, UL and DL transmissions are configured in frames. Each radio frame has a length of 10 ms and is divided into two 5-ms half frames (HFs). Each half frame is divided into five 1-ms subframes. A subframe is divided into one or more slots, and the number of slots in a subframe depends on the subcarrier spacing (SCS). Each slot includes 12 or 14 OFDM(A) symbols according to a Cyclic Prefix (CP). With a normal CP, a slot includes 14 OFDM symbols. With an extended CP, a slot includes 12 OFDM symbols. A symbol may include an OFDM symbol (CP-OFDM symbol) and an SC-FDMA symbol (or DFT-s-OFDM symbol).

### <Support of Various Numerologies>

As wireless communication technology advances, the NR system may offer various numerologies to terminals. For example, when a subcarrier spacing (SCS) is set at 15 kHz, it supports a broad range of the typical cellular bands. When a subcarrier spacing (SCS) is set at 30 kHz/60 kHz, it supports a dense-urban, lower latency, wider carrier bandwidth. When the SCS is 60 kHz or higher, it supports a bandwidth greater than 24.25 GHz in order to overcome phase noise.

These numerologies may be defined by the cyclic prefix (CP) length and the SCS. A single cell in the NR system is capable of providing multiple numerologies to terminals. Table 2 below shows the relationship between the subcarrier spacing, corresponding CP length, and the index of a numerology (represented by $\mu$).

[Table 2]

| $\mu$ | $\Delta f=2^{\mu}\cdot 15$ [kHz] | CP |
|---|---|---|
| 0 | 15 | normal |
| 1 | 30 | normal |
| 2 | 60 | normal, extended |
| 3 | 120 | normal |
| 4 | 240 | normal |
| 5 | 480 | normal |
| 6 | 960 | normal |

Table 3 below shows the number of OFDM symbols per slot ($N^{slot}_{symb}$), the number of slots per frame ($N^{frame,\mu}_{slot}$), and the number of slots per subframe ($N^{subframe,\mu}_{slot}$) according to each numerology expressed by $\mu$ in the case of a normal CP.

[Table 3]

| $\mu$ | $\Delta f=2^{\mu}\cdot 15$ [kHz] | $N^{slot}_{symb}$ | $N^{frame,\mu}_{slot}$ | $N^{subframe,\mu}_{slot}$ |
|---|---|---|---|---|
| 0 | 15 | 14 | 10 | 1 |
| 1 | 30 | 14 | 20 | 2 |
| 2 | 60 | 14 | 40 | 4 |
| 3 | 120 | 14 | 80 | 8 |
| 4 | 240 | 14 | 160 | 16 |
| 5 | 480 | 14 | 320 | 32 |
| 6 | 960 | 14 | 640 | 64 |

Table 4 below shows the number of OFDM symbols per slot ($N^{slot}_{symb}$), the number of slots per frame ($N^{frame,\mu}_{slot}$), and the number of slots per subframe ($N^{subframe,\mu}_{slot}$) of a numerology represented by $\mu$ in the case of an extended CP.

[Table 4]

| $\mu$ | SCS ($15*2^{u}$) | $N^{slot}_{symb}$ | $N^{frame,\mu}_{slot}$ | $N^{subframe,\mu}_{slot}$ |
|---|---|---|---|---|
| 2 | 60KHz (u=2) | 12 | 40 | 4 |

In the NR system, OFDM(A) numerologies (e.g., SCS, CP length, and so on) may be configured differently across multiple cells that are integrated with a single terminal. Accordingly, the duration of time resource may vary among these integrated cells. Here, the duration may be referred to as a section. The time resource may include a subframe, a slot or a transmission time interval (TTI). Further, the time resource may be collectively referred to as a time unit (TU) for simplicity and include the same number of symbols.

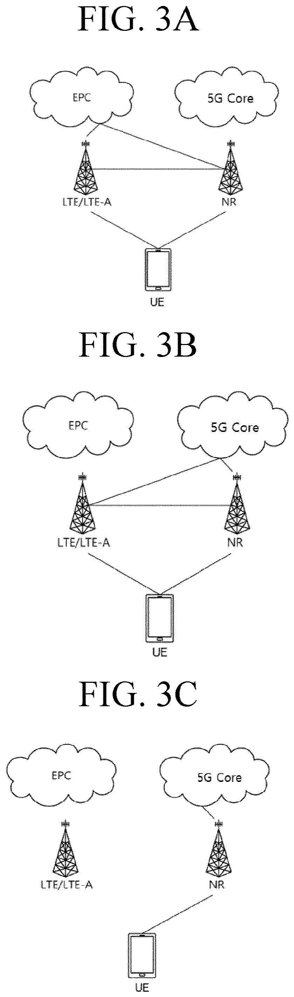

**FIGS. 3A to 3C illustrate exemplary architectures for a wireless communication service.**

Referring to FIG. 3A, a UE is connected in dual connectivity (DC) with an LTE/LTE-A cell and an NR cell.

The NR cell is connected with a core network for the legacy fourth-generation mobile communication, that is, Evolved Packet core (EPC).

Referring to FIG. 3B, the LTE/LTE-A cell is connected with a core network for 5th generation mobile communication, that is, a 5G core network.

A service provided by the architecture shown in FIGS. 3A and 3B is referred to as a non-standalone (NSA) service.

Referring to FIG. 3C, a UE is connected only with an NR cell. A service provided by this architecture is referred to as a standalone (SA) service.

In the new radio access technology (NR), the use of a downlink subframe for reception from a base station and an uplink subframe for transmission to the base station may be employed. This method may be applicable to both paired spectrums and unpaired spectrums. Paired spectrums involve two subcarriers designated for downlink and uplink operations. For example, one subcarrier within a pair of spectrums may include a pair of a downlink band and an uplink band.

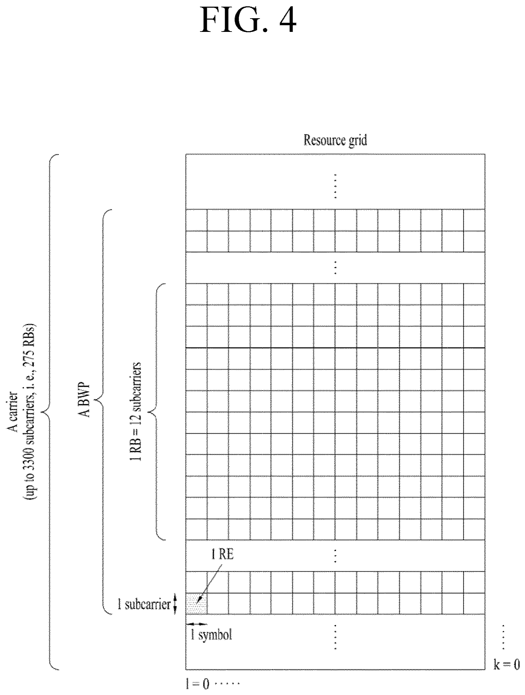

FIG. 4 illustrates a slot structure of an NR frame.

A slot in the NR system includes a plurality of symbols in the time domain. For example, in the case of the normal CP, one slot includes seven symbols. On the other hand, in the case of the extended CP, one slot includes six symbols. A carrier includes a plurality of subcarriers in the frequency domain. A resource block (RB) is defined as a set of consecutive subcarriers (e.g., 12 consecutive subcarriers) in the frequency domain. A bandwidth part (BWP) is defined as a sequence of consecutive physical resource blocks (PRBs) in the frequency domain and may be associated with a specific numerology (e.g., SCS, CP length, etc.). A terminal may be configured with up to N (e.g., five) BWPs in each of downlink and uplink. Downlink or uplink transmission is performed through an activated BWP. Among the BWPs configured for the terminal, only one BWP may be activated at a given time. In the resource grid, each element is referred to as a resource element (RE), and one complex symbol may be mapped thereto.

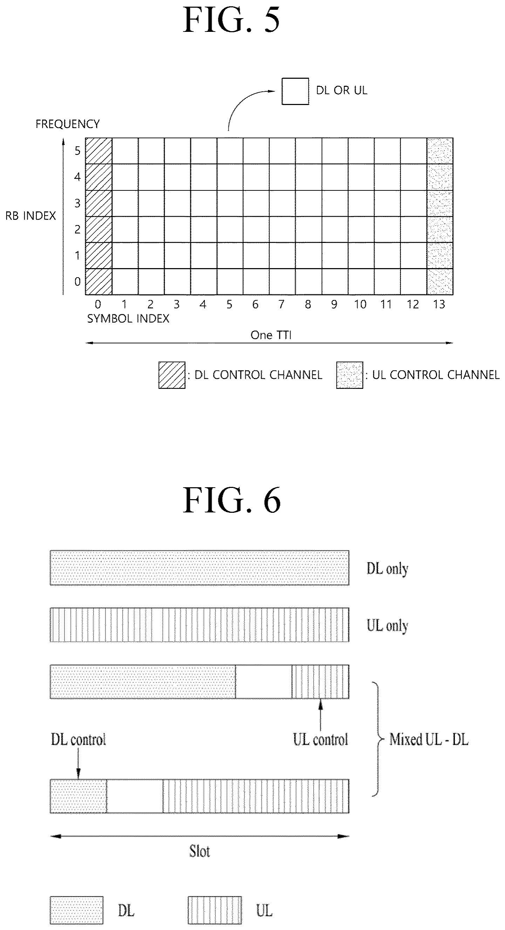

FIG. 5 shows an example of a subframe type in NR.

In NR (or new RAT), a Transmission Time Interval (TTI), as shown in FIG. 5, may be referred to as a subframe or slot. The subframe (or slot) may be utilized in a TDD system to minimize data transmission delay. As shown in FIG. 5, a subframe (or slot) includes 14 symbols. The symbol at the head of the subframe (or slot) may be allocated for a DL control channel, and the symbol at the end of the subframe (or slot) may be assigned for a UL control channel. The remaining symbols may be used for either DL data transmission or UL data transmission. This subframe (or slot) structure allows sequential downlink and uplink transmissions in a single subframe (or slot). Accordingly, downlink data may be received in a subframe (or slot) and uplink ACK/NACK may be transmitted in the same subframe (or slot).

Such a subframe (or slot) structure may be referred to as a self-contained subframe (or slot).

The first N symbols in a slot may be used to transmit a DL control channel and referred to as a DL control region, hereinafter. The last M symbols in the slot may be used to transmit a UL control channel and referred to as a UL control region. N and M are integers greater than 0. A resource region between the DL control region and the UL control region may be used for either DL data transmission or UL data transmission and referred to as a data region. For example, a physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region.

Using this subframe (or slot) structure reduces the time required for retransmitting data that has failed in reception, thereby minimizing overall data transmission latency. In such a self-contained subframe (or slot) structure, a time gap may be required for transitioning between a transmission mode and a reception mode or from the reception mode to the transmission mode. To accommodate this, a few OFDM symbols when switch from DL to UL in the subframe structure may be configured to a guard period (GP).

FIG. 6 illustrates a structure of a self-contained slot.

In the NR system, the frames are structured as a self-contained structure, where one single slot includes a DL control channel, either a DL or UL data channel, and UL control channel. For example, the first N symbols in a slot may be used for transmitting a DL control channel and referred to as a DL control region. The last M symbols in the slot may be used for transmitting an UL control channel and referred to as a UL control region. N and M are integers greater than 0. A resource region between the DL control region and the UL control region may be used for either DL data transmission or UL data transmission and referred to as a data region.

For example, the following configurations may be considered. The durations are listed in temporal order.

1. DL only configuration
2. UL only configuration
3. Mixed UL-DL configuration

– DL region + Guard Period (GP) + UL control region

– DL control region + GP + UL region

DL region: (i) DL data region, (ii) DL control region + DL data region

UL region: (i) UL data region, (ii) UL data region + UL control region

A physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region. Through the PDCCH, Downlink Control Information (DCI), for example, DL data scheduling information or UL data scheduling data may be transmitted. Through the PUCCH, Uplink Control Information (UCI), for example, ACK/NACK (Positive Acknowledgement/Negative Acknowledgement) information with respect to DL data, Channel State Information (CSI) information, or Scheduling Request (SR) may be transmitted. A guard period (GP) provides a time gap during a process where a gNB and a UE transition from the transmission mode to the reception mode or a process where the gNB and UE transition from the reception mode to the transmission mode. Some of symbols within a subframe that transition from DL to UL mode may be configured as the GP.

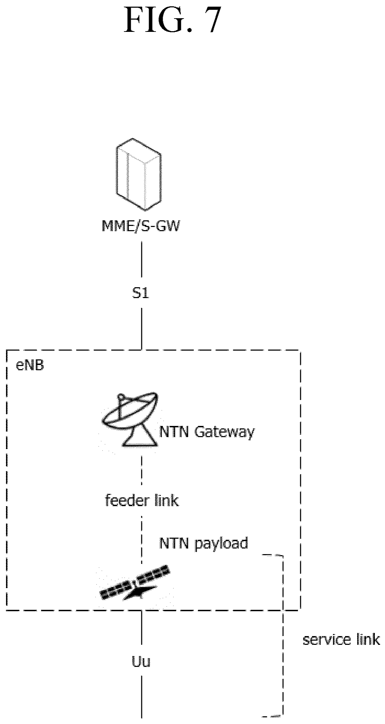

**FIG. 7 illustrates an example of an Internet of Things (IoT) Non-Terrestrial Network (NTN) architecture.**

In 3GPP, standardization for the IoT Non-Terrestrial Network (NTN) item was carried out in Release-17 and Release-18. Through this, the 4G/LTE radio access network (i.e., E-UTRAN) is enabled to provide NTN-based access to BL (Bandwidth reduced Low complexity) terminals, UEs in enhanced coverage, and NB-IoT (Narrow Band Internet of Things) terminals. The support is limited to E-UTRANs connected to an EPC. Terminals that do not support NTN are barred from accessing NTN cells.

FIG. 7 illustrates an example of an IoT NTN architecture. The IoT NTN technology provides NTN access to terminals (BL UEs, UEs in enhanced coverage, and/or NB-IoT UEs) by means of an NTN transparent payload and an NTN gateway. Here, the NTN payload refers to a network node, embarked onboard a satellite or high altitude platform station, providing connectivity functions, between the service link and the feeder link. The NTN payload functions as a Transport Network Layer (TNL) node. The NTN gateway refers to a terrestrial station located on the Earth's ground that provides connectivity to the NTN payload using a feeder link.

Meanwhile, a non-terrestrial network is inherently a broadcast medium that may cover a very wide service area. However, typical IoT NTN provided services only to IoT devices such as BL terminals, UEs in enhanced coverage, and NB-IoT terminals. In the case of NB-IoT terminals, the reception of emergency/warning messages was not supported. Therefore, it was difficult for IoT-NTN capable terminals to receive emergency/warning messages. Delivering such data to a large number of terminals via unicast is poorly scalable.

As described above, the typical IoT NTN was limited to serving IoT devices such as BL terminals, UEs in enhanced coverage, and NB-IoT terminals. In the case of NB-IoT terminals, the emergency/warning message reception function was not supported, thereby preventing IoT-NTN capable terminals from receiving such emergency/warning messages. An embodiment of the disclosure, devised to solve this problem, proposes a method and apparatus for receiving emergency/alert/warning messages for non-terrestrial network-based and/or terrestrial network-based NB-IoT terminals. The message may be broadcast.

Hereinafter, a paging method based on E-UTRAN/EPS technology will be described. However, this is for convenience of explanation, and the present disclosure may be applied to any radio access technology base (e.g., 5G, 6G). The embodiments described in this specification may refer to information elements and operation details defined in the E-UTRAN/EPS standards (e.g., the MAC standard TS 36.321, the RRC standard TS 36.331, the system architecture standard TS 23.401, etc.). Even if the terminal operation details related to the definition of relevant information elements are not described in this specification, the details specified in the well-known standard specifications may be included in the present disclosure.

Any functionality described below may be defined as an individual UE radio capability or UE Core network capability and may be transmitted by a terminal/device to a base station/core network entity (e.g., MME (Mobility Management Entity)/S-GW (Serving Gateway)) through corresponding signaling. Alternatively, multiple functionalities may be combined/coupled and defined as a corresponding terminal capability and may be transmitted to the base station/core network entity through corresponding signaling upon a request from the base station.

The base station may transmit/indicate information indicating the permission/support/configuration of any function or any function combination described below to a terminal through any downlink message (e.g., RRC message, MAC Control Element). For example, it may indicate (e.g., transmit, provide, report) this to the terminal before or at the same time as the configuration/application of the corresponding functionality/ combination of functionalities. The message may be broadcast within the corresponding area. The message may be transmitted (e.g., unicast) to a single terminal within the corresponding area. The message may be transmitted (e.g., groupcast) to a group of UEs within the corresponding area.

The base station may transmit/indicate information for limiting/controlling any function (e.g., functionality) described below to a terminal through any downlink message (e.g., RRC message, MAC Control Element). For example, it may indicate a prohibit timer for the corresponding function. It may start/restart the corresponding prohibit timer before initiating or when initiating the corresponding function. While the timer is running, the terminal may be restricted/controlled from initiating/executing the corresponding function. For example, it may indicate this to the terminal before or at the same time as the configuration/application of the corresponding function/function combination (e.g., functionality or combination of functionalities). The message may be broadcast within the corresponding area. The message may be transmitted (unicast) to a single terminal within the corresponding area. The message may be transmitted (groupcast) to a group of UEs within the corresponding area.

The embodiments and corresponding functionalities described below may be performed individually and independently. The embodiments and related operations described below may also be implemented in combining/coupling any embodiments and related operations, and it is obvious that this is also included in the scope of the present disclosure. The operations related to any embodiment may be performed in a different order.

Any information described below may be traffic characteristic information statistically/empirically obtained/calculated/derived at the terminal/network (e.g., any statistic/statistical measure such as expected value/average, deviation, standard deviation, minimum, maximum, etc.). Therefore, any information included in this specification may represent one or more values among the average (expected value)/minimum/maximum/standard deviation values. This is for convenience of explanation, and all information in this specification may be used as statistical information. Any information described below may be information pre-configured in the terminal/network or provisioned through OAM (Operations, Administration, and Maintenance)/application server/application function/UDM (Unified Data Management).

Hereinafter, for convenience of explanation, a method for broadcasting a message to an NB-IoT terminal will be described. This is only for convenience of explanation. However, embodiments of the disclosure may also be applied to BL terminals and terminals with extended coverage, which is also intended to be included in the scope of the present disclosure. Hereinafter, a terminal may refer to an NB-IoT terminal or an NTN-capable NB-IoT terminal. The following functions may be applied either to an NTN-capable NB-IoT terminal Or to a terrestrial network-based PWS (Public Warning System)/ETWS (Earthquake and Tsunami Warning System)/CMAS (Commercial Mobile Alert System)-capable NB-IoT terminal that does not support NTN.

## First Disclosure

### Addition of System Information to Support Emergency/Alert/Warning Message Reception for (NTN capable) NB-IoT Terminals

As described above, typical NB-IoT terminals could not receive messages through emergency warning system (e.g., alert systems) such as ETWS, CMAS, and PWS via a base station (e.g., an E-UTRAN base station). To support reception of such messages by NTN-capable NB-IoT terminals, NB-IoT system information for supporting emergency/alert/warning message reception may be defined and broadcast by the base station.

For example, a base station may define and broadcast NB-IoT system information to support emergency/alert/warning message reception for an NTN-capable NB-IoT terminal.

For another example, an NTN-capable NB-IoT terminal may receive NB-IoT system information for supporting emergency/alert/warning message reception. An NB-IoT terminal that does not support NTN (e.g., non-NTN-capable NB-IoT terminal) may be restricted from receiving NB-IoT system information for supporting emergency/alert/warning message reception. An NTN-capable NB-IoT terminal may optionally be defined as a PWS/ETWS/CMAS-capable terminal (by defining the corresponding terminal capability). Alternatively, an NTN-capable NB-IoT terminal may be defined as a PWS/ETWS/CMAS-capable terminal.

For another example, an NB-IoT terminal that does not support NTN (e.g., non-NTN-capable NB-IoT terminal) may not receive NB-IoT system information for supporting emergency/alert/warning message reception. For example, an NB-IoT terminal that does not support NTN may ignore the NB-IoT system information for supporting emergency/alert/-warning message reception.

For another example, regardless of NTN support, an NB-IoT terminal may support the reception of emergency/alert/warning messages. Any NB-IoT terminal may be defined with a terminal capability for the PWS/ETWS/CMAS feature. If an NB-IoT terminal has the capability of a PWS/ETWS/CMAS-capable terminal, it may receive NB-IoT system information for supporting emergency/alert/warning message reception.

For another example, a terminal capability for supporting the reception of emergency/alert/warning messages for an NB-IoT terminal may be defined. This terminal capability may be defined as a new terminal capability distinguished from the PWS features terminal capability of the related art (ETWS/CMAS/KPAS/EU-Alert capability included in section 6 of 3GPP TS 36.306, optional features without UE radio access capability parameters). Alternatively, this terminal capability may be reused from the PWS features terminal capability of the related art.

For another example, an NB-IoT system information block type for ETWS primary notification and/or an NB-IoT system information block type for ETWS secondary notification may be defined and broadcast by a base station. The NB-IoT system information block type may include at least one of: a message identifier for identifying the source and type of the ETWS notification; a serial number for identifying variations of the ETWS notification; warning type information for identifying the warning type of the ETWS primary notification; warning message segment type information for indicating whether the included ETWS warning message segment is the last segment; a warning message segment number indicating the segment number of the ETWS warning message segment included in the corresponding system information (SIB); warning message segment information carrying one segment of the warning message content; data coding scheme information for identifying the coding and language applicable to the ETWS notification if it is the first segment of the system information; and an intended service area/area list of the ETWS notification.

For another example, an NB-IoT system information block type for CMAS notification information may be defined and broadcast by a base station. The NB-IoT system information block type may include at least one of: a message identifier for identifying the source and type of the CMAS notification; a serial number for identifying variations of the CMAS notification; warning message segment information carrying one segment of the warning message content; warning type information for identifying the warning type of the CMAS notification; a warning message segment number indicating the segment number of the CMAS warning message segment included in the corresponding system information (SIB); warning message segment type information for indicating whether the included CMAS warning message segment is the last segment; data coding scheme information for identifying the coding and language applicable to the CMAS notification if it is the first segment of the system information; a warning area coordinates segment representing one segment of the geographical area where the CMAS warning message is valid; warning area coordinates representing the geographical area where the CMAS warning message is valid; and an intended service area/area list of the CMAS notification.

For another example, the warning area coordinates may represent the alert area coordinates of the warning message. This information may be represented as a (1, ..., 1024) octet string type. The information may be encoded/decoded according to ATIS-0700041 ('WEA 3.0: Device-Based Geo-Fencing'), which is the device-based geo-fencing standard of ATIS (Alliance for Telecommunications Industry Solutions). The first octet of the warning area coordinates segment is equivalent to the first octet of the warning area coordinates information. The second octet of the warning area coordinates segment is equivalent to the second octet of the warning area coordinates information. The same applies to the subsequent octets.

For another example, the warning area coordinates information included in the NB-IoT system information block type for ETWS/CMAS notification information may include intended service area information. To support this, the corresponding system information may further include indicator specifying whether intended service area information. If this indicator is set to a specific value (e.g., true), the terminal may apply the warning area coordinates information as the intended service area information.

For another example, the warning area coordinates information included in the NB-IoT system information block type for ETWS/CMAS notification information may be encoded/decoded using intended service area information (e.g., reference location, radius, polygon), and an indication of such encoding/decoding of the warning area coordinate information may be indicated (e.g., provided) through the corresponding system information.

For another example, the warning area coordinates segment included in the NB-IoT system information block type for ETWS/CMAS notification information may be represented as intended service area information. The first octet of the warning area coordinates segment is equivalent to the first octet of the intended service area information. The second octet of the warning area coordinates segment is equivalent to the second octet of the intended service area information as well as the subsequent octets.

For another example, the intended service area information included in the NB-IoT system information block type for ETWS/CMAS notification information may be represented as an intended service area segment. The first octet of the intended service area segment is equivalent to the first octet of the intended service area information. The second octet of the intended service area segment is equivalent to the second octet as well as the subsequent octets.

For another example, the NB-IoT system information block type for ETWS/CMAS notification information may include intended service area information. To support this, information for providing the indication/use/application/setup/release of the intended service area information may be included/added in the corresponding system information. The information may be indicated by explicit indication information or implicitly through other information within the corresponding system information.

For another example, the intended service area information included in the NB-IoT system information block type for ETWS/CMAS notification information may include a reference location and a radius as sub-information elements.

For another example, the intended service area information included in the NB-IoT system information block type for ETWS/CMAS notification information may include an ordered sequence of points representing a polygon as a sub-information element.

For another example, the intended service area information included in the NB-IoT system information block type for ETWS/CMAS notification information may be selected from either i) a format/type having a reference location and a radius as sub-information elements or ii) a format/type having an ordered sequence of points representing a polygon as sub-information elements.

Linkage of ETWS/CMAS Reception after Paging via systemInfoModification Indication

An NB-IoT terminal may receive warning/emergency messages by utilizing an information element/field included in a typical NB-IoT paging message. For example, systemInfoModification may be utilized to enable an NB-IoT terminal to receive warning/emergency messages.

For example, if an NB-IoT terminal is configured with a DRX (Discontinuous Reception) cycle no longer than the (system information) modification period, and if systemInfoModification is included, or if an NB-IoT terminal is configured with a DRX cycle that is longer than the (system information) modification period, and if systemInfoModification-eDRX is included, the terminal may acquire the corresponding NB-IoT system information block type (NB-IoT system information block type for PWS notification information, NB-IoT system information block type for ETWS notification information (NB-IoT system information block type for ETWS primary notification, NB-IoT system information block type for ETWS secondary notification, and/or NB-IoT system information block type for CMAS notification information)).

For another example, if a PWS/ETWS/CMAS-capable NB-IoT terminal is configured with a DRX cycle not longer than the (system information) modification period, and if systemInfoModification is included; or if a PWS/ETWS/CMAS-capable NB-IoT terminal is configured with a DRX cycle that is longer than the (system information) modification period, and if systemInfoModification-eDRX is included, the terminal may acquire the corresponding NB-IoT system information block type (NB-IoT system information block type for PWS notification information, NB-IoT system information block type for ETWS primary notification, NB-IoT system information block type for ETWS secondary notification, and/or NB-IoT system information block type for CMAS notification information).

For another example, if the terminal is an NB-IoT terminal and/or if the terminal is a PWS/ETWS/CMAS-capable terminal, at least one system information block (SIB) among the NB-IoT system information block type for PWS notification information, the NB-IoT system information block type for ETWS primary notification, the NB-IoT system information block type for ETWS secondary notification, and the NB-IoT system information block type for CMAS notification information may be defined as required system information.

For another example, if the terminal is an NB-IoT terminal and/or if the terminal is a PWS/ETWS/CMAS-capable terminal, the UE shall ensure that it has a valid version of at least one system information block (SIB) among the NB-IoT system information block type for PWS notification information, the NB-IoT system information block type for ETWS primary notification, the NB-IoT system information block type for ETWS secondary notification, and the NB-IoT system information block type for CMAS notification information.

For another example, if the terminal is an NB-IoT terminal and/or if the terminal is a PWS/ETWS/CMAS-capable terminal, and if the NB-IoT MasterInformationBlock-NB/MasterInformationBlock-TDD-NB (MIB-NB) is different from the stored system information, any stored system information may be considered invalid, except for the NB-IoT system information block type for PWS notification information, the NB-IoT system information block type for ETWS primary notification, the NB-IoT system information block type for ETWS secondary notification, and/or the NB-IoT system information block type for CMAS notification information.

For another example, if the terminal is an NB-IoT terminal and/or if the terminal is a PWS/ETWS/CMAS-capable terminal, even if the NB-IoT MIB-NB (MasterInformationBlock-NB/MasterInformationBlock-TDD-NB) is different from the stored system information, the stored system information for the NB-IoT system information block type for PWS notification information, the NB-IoT system information block type for ETWS primary notification, the NB-IoT system information block type for ETWS secondary notification, and/or the NB-IoT system information block type for CMAS notification information may be considered valid.

System Information Processing for Supporting Emergency/Alert/Warning Message Reception in an NB-IoT Terminal

When an (NTN-Capable) NB-IoT terminal receives NB-IoT system information for PWS/ETWS/CMAS notification (e.g., SystemInformationBlockETWS/CMAS-NB), the terminal may operate as described below.

For example, if all segments of one warning message have been received, the received warning message segment(s) may be assembled. At least one of the received warning message, message identifier, serial number, data coding scheme, warning area coordinates, and intended service area information may be forwarded to an upper layer. The reception of the corresponding NB-IoT system information may be stopped. The current values for the message identifier and serial number for the corresponding NB-IoT system information may be discarded.

For another example, if no current values exists for the message identifier and serial number for the corresponding NB-IoT system information, or if at least one received values of the message identifier and serial number differs from the current message identifier and serial number,

the terminal may use the received values of the message identifier and serial number for the NB-IoT system information as the current values of the message identifier and serial number for the NB-IoT system information. The terminal may discard any previously buffered warning message segments. If all segments of one warning message have been received, the received warning message segment(s) may be assembled. At least one of the received warning message, message identifier, serial number, data coding scheme, warning area coordinates, and intended service area information may be forwarded to an upper layer. The reception of the corresponding NB-IoT system information may be stopped. The current values for the message identifier and serial number for the corresponding NB-IoT system information may be discarded.

Otherwise, the terminal may store the received warning message segment. The reception of the corresponding NB-IoT system information may continue.

For another example, if the corresponding NB-IoT system information includes one complete warning message and (if present) complete geographical area coordinates and/or an intended service area, the terminal may forward at least one of the following: a received warning message, message identifier, serial number, data coding scheme, warning area coordinates/geographical area coordinates, and intended service area information to an upper layer. The terminal may continue to receive the corresponding NB-IoT system information.

Otherwise, if the received values of the message identifier and serial number are identical to the pair ((message identifier value, serial number value)) for the warning message and warning area coordinates/geographical area coordinates/intended service area currently being assembled (e.g., the message identifier value and the serial number value are respectively identical), the received warning message segment may be stored. The received warning area coordinates/geographical area coordinates/intended service area may be stored.

If all segments of the warning message and the warning area coordinates/geographical area coordinates/intended service area have been received, the warning message may be assembled from the received warning message segments. The geographical area coordinates may be assembled from the received warning area coordinates/geographical area coordinates/intended service area. At least one of the message identifier, serial number, data coding scheme, warning area coordinates/geographical area coordinates, and intended service area information may be forwarded to an upper layer. The assembly of the warning message and the warning area coordinates/geographical area coordinates/intended service area for the corresponding message identifier and serial number may be stopped. All stored information related thereto may be deleted. The reception of the corresponding NB-IoT system information may continue.

If the received values of the message identifier and serial number are not identical to any value of the pair ((message identifier value, serial number value)) for the warning message and warning area coordinates/geographical area coordinates/intended service area currently being assembled, the assembly of the warning message for the corresponding message identifier and serial number pair may be started. The assembly of the warning area coordinates/geographical area coordinates/intended service area for the corresponding message identifier and serial number pair may be started. The received warning message segment may be stored. The received warning area coordinates/geographical area coordinates/intended service area may be stored. The reception of the corresponding NB-IoT system information may continue.

For another example, if a complete warning message and (complete) warning area coordinates/geographical area coordinates/intended service area have not been assembled within a 3-hour period, at least one of the warning message segment, warning area coordinates segment, message identifier (or its value), and serial number (or its value) for the corresponding NB-IoT system information may be discarded.

For another example, when an (NTN-Capable) NB-IoT terminal receives NB-IoT system information for ETWS primary notification (e.g., SystemInformationBlockETWS-primary-NB), one or more of the received warning message, message identifier, serial number, data coding scheme, warning area coordinates, and intended service area information may be forwarded to an upper layer.

For another example, when an (NTN-Capable) NB-IoT terminal receives NB-IoT system information for ETWS secondary notification (e.g., SystemInformationBlockETWS-secondary-NB), if there are no current values for the message identifier and serial number, or if at least one received value differs from the current values, the terminal may use the received values for the corresponding NB-IoT system information as the current values of the message identifier and serial number for the corresponding NB-IoT system information. The terminal may discard any previously buffered warning message segments. If all segments of one warning message have been received, the warning message may be assembled from the received warning message segment(s). One or more of the received warning message, message identifier, serial number, data coding scheme, warning area coordinates, and intended service area information may be forwarded to an upper layer. The reception of the corresponding NB-IoT system information may then stop. The current values for the message identifier and serial number for the corresponding NB-IoT system information may be discarded.

Otherwise, the terminal may store the received warning message segment. The reception of the corresponding NB-IoT system information may be continued.

For another example, the system information for ETWS notification for an (NTN-Capable) NB-IoT terminal may include a single system information block. For example, in the typical E-UTRAN technology, the system information for ETWS notification was divided into system information for primary notification (SystemInformationBlockType10) and system information for secondary notification (SystemInformationBlockType11), and the terminal's reception operation was specified separately according to each system information block. To reduce the complexity of the NB-IoT terminal, the system information for ETWS notification for an (NTN-Capable) NB-IoT terminal may be defined as a single integrated system information block.

For another example, if system information acquisition follows a system information change notification, the terminal may start acquiring the corresponding NB-IoT system information immediately upon receipt of the change notification.

For another example, if system information acquisition follows a system information change notification, the terminal may start acquiring the corresponding NB-IoT system information at the start of the next modification period after receiving the change notification.

For another example, if the terminal is a PWS/ETWS/CMAS-capable terminal, when entering a cell during RRC idle and/or after a connection re-establishment, the terminal may discard any previously buffered warning message segments. The current values of the message identifier and serial number may be deleted/removed.

For another example, if a PWS/ETWS/CMAS-capable terminal is not an NTN-capable NB-IoT terminal (or an NB-IoT terminal), when entering a cell during RRC idle, after a successful handover, and/or after an RRC connection re-establishment, the terminal may discard any previously buffered warning message segments. The current values of the message identifier and serial number may be deleted/removed.

If a PWS/ETWS/CMAS-capable terminal is an NTN-capable NB-IoT terminal (or an NB-IoT terminal), when entering a cell during RRC idle and/or after an RRC connection re-establishment, the terminal may discard any previously buffered warning message segments. The current values of the message identifier and serial number may be deleted/removed.

For another example, after receiving PWS/ETWS/CMAS indication information (e.g., PWS/ETWS/CMAS indication information transmitted via a paging message and/or direct indication information), when the terminal acquires NB-IoT SystemInformationBlockType1 while entering a cell during RRC idle or upon RRC connection re-establishment, if the scheduling information list indicates that the NB-IoT system information block type for supporting the corresponding emergency/alert/warning message reception is present, the terminal may start acquiring the corresponding NB-IoT system information. For example, in the case of NB-IoT system information for CMAS reception, the terminal may acquire it. Subsequently, at the beginning of the modification period, the terminal may continue the acquisition.

For another example, after receiving PWS/ETWS/CMAS indication information (e.g., PWS/ETWS/CMAS indication information transmitted via a paging message and/or direct indication information), when the terminal acquires NB-IoT SystemInformationBlockType1 while entering a cell during RRC idle or upon RRC connection re-establishment, if the scheduling information list indicates that the NB-IoT system information block type for supporting the corresponding emergency/alert/warning message reception is present, the terminal may immediately start acquiring the corresponding NB-IoT system information. For example, in the case of NB-IoT system information for ETWS reception, the terminal may acquire it immediately.

For another example, an NB-IoT terminal that supports warning message reception in a connected state (e.g., an ETWS capable UE, a CMAS capable UE) may monitor or acquire information to acquire/detect/receive an ETWS notification or a CMAS notification through i) the content of a paging channel and/or (NB-IoT) SystemInformationBlock-Type2, ii) a control channel associated with a shared data channel, iii) system information, or iv) system information even if the T311 timer (e.g., a timer started when an RRC connection re-establishment procedure is initiated (or an RRC connection re-establishment request message is sent) due to radio link failure, etc.) is not running.

For another example, the terminal shall ensure that it has a valid version of the required system information. For example, if the terminal is an NB-IoT terminal, it shall ensure that it has a valid version of MIB-NB, SIB1-NB, SIB2-NB to SIB5-NB, SIB22-NB (MasterInformationBlock-NB/MasterInformationBlock-TDD-NB and SystemInformationBlock-Type1-NB as well as SystemInformationBlockType2-NB through SystemInformationBlockType5-NB, SystemInformationBlockType22-NB;). If the terminal is an NTN-capable terminal, it shall ensure that it has a valid version of SIB31-NB. The terminal may delete any stored information 3 hours or 24 hours after confirmation of validity, as defined in 3GPP TS 36.331 section 5.2.1.3 (System information validity and notification of changes).

If the systemInfoValueTag included in the NB-IoT MIB (MasterInformationBlock-NB/MasterInformationBlock-TDD-NB in NB-IoT) is different from that of the stored system information and if the SI message-specific value tag (systemInfoValueTagSI) is not broadcast for the NB-IoT terminal, the terminal may consider any stored NB-IoT system information to be invalid, except for the NB-IoT system information including access barring parameters (System-InformationBlockType14-NB in NB-IoT), the NB-IoT system information including satellite assistance information (SystemInformationBlockType31-NB in NB-IoT), and the NB-IoT system information including PWS/ETWS/CMAS notifications. For example, even when the systemInfoValueTag included in the NB-IoT MIB is different from the system-InfoValueTag of the stored system information and the SI message-specific value tag (systemInfoValueTagSI) is not broadcast for the NB-IoT terminal, the NB-IoT system information including PWS/ETWS/CMAS notifications may be considered valid.

**Second Disclosure**

As described above, the emergency/warning message function for NB-IoT terminals was not supported in the prior art. Transmitting individual emergency/warning messages to each of a large number of NB-IoT terminals serviced via a non-terrestrial network is highly inefficient. A paging method for triggering the reception of broadcast emergency/warning messages by NB-IoT terminals needs to be defined.

For example, an NB-IoT paging message may be made to include at least one of PWS indication information, ETWS indication information, and CMAS indication information. The PWS indication information, if present, indicates a PWS notification (this information may indicate information for the indication of any or an integrated emergency/warning/alert message notification). The ETWS indication information, if present, indicates information for the indication of an ETWS primary notification and/or an ETWS secondary notification (or, if an NB-IoT terminal supports a single integrated ETWS notification for which system information is defined without distinguishing between ETWS primary notification and ETWS secondary notification to reduce complexity, it is information for the indication of the corresponding ETWS notification). The CMAS indication information, if present, indicates a CMAS notification.

The NB-IoT paging message may inform a PWS/ETWS/CMAS-capable NB-IoT terminal, whether in RRC idle or RRC connected state, about the presence of one more of PWS, ETWS primary or secondary, and/or CMS notification. If an NB-IoT terminal receives a paging message including PWS indication information/ETWS indication information/CMAS indication information, the terminal may start receiving the PWS notification, ETWS primary notification, ETWS secondary notification, and/or CMAS notification according to the scheduling information list included in NB-IoT SystemInformation-BlockType1-NB (SIB1-NB).

For another example, if an NB-IoT terminal receives a paging message including PWS, ETWS, or CMAS indication information while already receiving PWS/ETWS/CMAS notifications, the terminal may continue to acquire the PWS/ETWS/CMAS notification(s) based on the previously acquired scheduling information list until it reacquires the scheduling information list included in NB-IoT SystemInformationBlockType1.

For another example, a paging message including PWS indication information/ETWS indication information/CMAS indication information may trigger an NB-IoT terminal to reacquire the scheduling information list included in NB-IoT SystemInformationBlockType1. The scheduling information list may indicate a scheduling change for the NB-IoT system information block type for PWS notification, ETWS primary notification, ETWS secondary notification, and/or CMAS notification information.

For another example, for a PWS/ETWS/CMAS-capable NB-IoT terminal, if the scheduling information list included in NB-IoT SystemInformationBlockType1 indicates that one or more system information blocks for PWS notification, ETWS primary notification, or ETWS secondary notification, and/or CMAS notification information are present, the terminal may acquire the corresponding NB-IoT system information blocks (e.g., NB-IoT system information block type for PWS notification information, NB-IoT system information block type for ETWS primary notification, NB-IoT system information block type for ETWS secondary notification, and/or NB-IoT system information block type for CMAS notification information).

For another example, if PWS, ETWS, or CMAS indication information is included in an NB-IoT paging message, a PWS/ETWS/CMAS-capable NB-IoT terminal may reacquire NB-IoT SystemInformationBlockType1 immediately without waiting for the next system information modification period boundary.

In the related art, Direct Indication information was transmitted on NPDCCH using P-RNTI but without an associated Paging-NB message. In the related art, direct indication information for NB-IoT indicates a system information modification via bit 1 or 2. The remaining bits are unused. DCI format N2 was used for direct indication information, and the direct indication information has an 8-bit value.

Direct indication information may be utilized to support efficient warning message reception for an NB-IoT terminal in RRC idle state and/or RRC connected state. For example, one or more of the currently unused bits n (bit 3/4/5/6/7/8) may be mapped/associated with PWS, ETWS, or CMAS indication information to support such reception.

As an example, bit 3 may be used as ETWS indication information. Bit 4 may be used as CMAS indication information. (Alternatively, bit 4 may be used as CMAS indication information. Bit 3 may be used as ETWS indication information. Or bit 3 may be used as any warning message indication information (e.g., PWS-indication).) When the corresponding bit n (e.g., bit 3 or bit 4) is set to 1, the terminal may operate as if a corresponding field were set in a paging message. For example, if the terminal is an NB-IoT terminal and/or if the terminal is a PWS/ETWS/CMAS-capable terminal, when the corresponding bit n (bit 3/4) is set to 1, the terminal may operate as if the corresponding field (ETWS indication information/CMAS indication information) were set in a paging message.

For another example, when receiving bit 1 used for systemInfoModification or bit 2 used for systemInfoModification-eDRX according to the prior art, an NB-IoT terminal may be made to receive a warning message. For example, if the terminal is an NB-IoT terminal and/or if the terminal is a PWS/ETWS/CMAS-capable terminal, when bit 1 and/or bit 2 is set to 1, the terminal may operate as if the corresponding field (system information modification indication) were set in a paging message. And/or, the terminal may be made to operate as if the corresponding field (ETWS indication information/CMAS indication information) were set in a paging message. After receiving a system information modification indication, a PWS/ETWS/CMAS-capable NB-IoT terminal may start receiving a PWS notification, ETWS primary notification, ETWS secondary notification, and/or CMAS notification according to the scheduling information list included in NB-IoT System-InformationBlockType1-NB (SIB1-NB). After receiving a system information modification indication, for a PWS/ETWS/CMAS-capable NB-IoT terminal, a paging message including PWS indication information/ETWS indication information/CMAS indication information may trigger the NB-IoT terminal to reacquire the scheduling information list included in NB-IoT SystemInformationBlockType1 according to the scheduling information list included in NB-IoT SystemInformationBlock-Type1-NB (SIB1-NB).

For another example, when receiving bit 1 used for systemInfoModification or bit 2 used for systemInfoModification-eDRX according to the prior art, an NB-IoT terminal may receive a warning message. For example, if the terminal is an NB-IoT terminal and/or if the terminal is a PWS/ETWS/CMAS-capable terminal, when bit 1 and/or bit 2 is set to 1, the terminal may acquire the corresponding NB-IoT system information block type (NB-IoT system information block type for PWS notification information, NB-IoT system information block type for ETWS primary notification, NB-IoT system information block type for ETWS secondary notification, and/or NB-IoT system information block type for CMAS notification information).

For another example, when receiving bit 1 used for systemInfoModification or bit 2 used for systemInfoModification-eDRX according to the prior art, an NB-IoT terminal may receive a warning message. For example, if the terminal is an NB-IoT terminal and/or if the terminal is a PWS/ETWS/CMAS-capable terminal, when bit 1 and/or bit 2 is set to 1, at least one of i) the NB-IoT system information block type for PWS notification information, ii) the NB-IoT system information block type for ETWS primary notification, iii) the NB-IoT system information block type for ETWS secondary notification, and/or iv) the NB-IoT system information block type for CMAS notification information may be defined as required system information. The UE shall ensure that it has a valid version of at least one of i) the NB-IoT system information block type for PWS notification information, ii) the NB-IoT system information block type for ETWS primary notification, iii) the NB-IoT system information block type for ETWS secondary notification, and iv) the NB-IoT system information block type for CMAS notification information. If the NB-IoT MasterInformationBlock-NB/MasterInformationBlock-TDD-NB (MIB-NB) is different from the stored system information, any stored system information may be considered invalid, except for the NB-IoT system information block types for PWS notification, ETWS primary notification, ETWS secondary notification, and/or CMAS notification information.

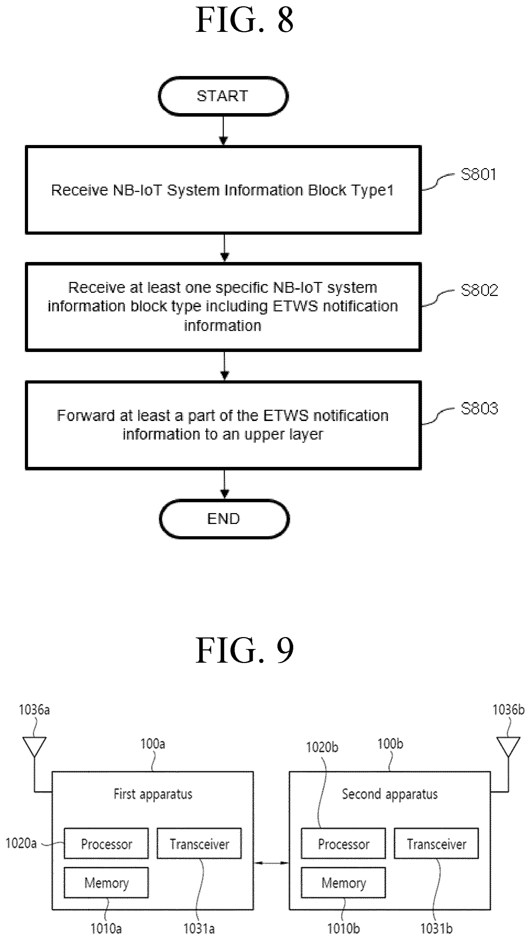

**FIG. 8 is a flowchart illustrating an operation method of a terminal according to an embodiment of the disclosure.**

Referring to FIG. 8, a terminal receives an NB-IoT (Narrowband-Internet of Things) System Information Block Type1 from a base station (S801). Then, after receiving the NB-IoT System Information Block Type1, the terminal receives at least one specific NB-IoT system information block type containing ETWS (Earthquake and Tsunami Warning System) notification information from the base station (S802). Subsequently, the terminal forwards at least a part of the ETWS notification information to an upper layer (S803). Here, the ETWS notification information may include warning area coordinates information.

The at least one specific NB-IoT system information block type may include i) a first NB-IoT specific system information block type for an ETWS primary notification and ii) a second NB-IoT specific system information block type for an ETWS secondary notification.

Meanwhile, terminal capability information associated with the reception of the ETWS notification information may be indicated to a network, wherein the terminal capability information may include support for Non-Terrestrial Network (NTN) access. The terminal capability information may be defined as information distinguished from an optional feature without a terminal radio access capability parameter. That is, the terminal capability information may be included in terminal radio access capability parameters.

The NB-IoT System Information Block Type1 may include scheduling information indicating the presence of one or more specific NB-IoT system information block types, wherein the terminal may, based on the scheduling information, immediately start acquisition of i) the first NB-IoT specific system information block type and ii) the second NB-IoT specific system information block type.

When the warning area coordinates information is included as a warning area coordinates segment included in the second NB-IoT specific system information block type, the warning area coordinates segment may be assembled accordingly. If the complete warning area coordinates are not assembled within a 3-hour period, the warning area coordinates segment may be discarded.

The disclosures may be implemented through various means. For example, they may be realized in hardware, firmware, software, or a combination thereof. This will be described in detail with reference to the following drawings.

**FIG. 9 is a block diagram showing apparatuses according to an embodiment of the disclosure.**

Referring to FIG. 9, a wireless communication system may include a first apparatus 100a and a second apparatus 100b.

The first apparatus 100a may include a base station, a network node, a transmission terminal, a reception terminal, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The second apparatus 100b may include a base station, a network node, a transmission terminal, a reception terminal, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The first apparatus 100a may include at least one processor such as a processor 1020a, at least one memory such as a memory 1010a, and at least one transceiver such as a transceiver 1031a. The processor 1020a may be tasked with executing the previously mentioned functions, procedures, and/or methods. The processor 1020a may be capable of implementing one or more protocols. For example, the processor 1020a may perform and manage one or more layers of a radio interface protocol. The memory 1010a may be connected to the processor 1020a and configured to store various types of information and/or instructions. The transceiver 1031 a may be connected to the processor 1020a, and controlled to transceive radio signals.

The second apparatus 100b may include at least one processor such as a processor 1020b, at least one memory device such as a memory 1010b, and at least one transceiver such as a transceiver 1031b. The processor 1020b may be tasked with executing the previously mentioned functions, procedures, and/or methods. The processor 1020b may be capable of implementing one or more protocols. For example, the processor 1020b may manage one or more layers of a radio interface protocol. The memory 1010b may be connected to the processor 1020b and configured to store various types of information and/or instructions. The transceiver 1031b may be connected to the processor 1020b and controlled to transceive radio signaling.

The memory 1010a and/or the memory 1010b may be respectively connected internally or externally to the processor 1020a and/or the processor 1020b and connected to other processors through various technologies such as wired or wireless connection.

The first apparatus 100a and/or the second apparatus 100b may have one or more antennas. For example, an antenna 1036a and/or an antenna 1036b may be configured to transceive a radio signal.

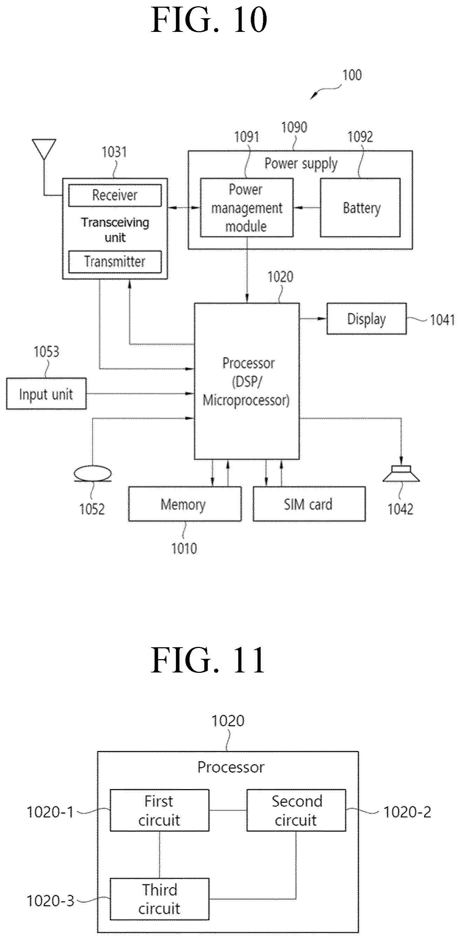

**FIG. 10 is a block diagram showing a terminal (e.g., user equipment: UE) according to an embodiment of the disclosure.**

In particular, FIG. 10 illustrates the previously described apparatus of FIG. 9 in more detail.

The apparatus includes a memory 1010, a processor 1020, a transceiving unit 1031 (e.g., transceiving circuit), a power management module 1091 (e.g., power management circuit), a battery 1092, a display 1041, an input unit 1053 (e.g., input circuit), a loudspeaker 1042, a microphone 1052, a subscriber identification module (SIM) card, and one or more antennas. Some of the constituent elements is referred to as a unit in the disclosure. However, the embodiments are not limited thereto. For example, such term "unit" is also referred to as a circuit block, a circuit, or a circuit module.

The processor 1020 may be configured to implement the proposed functions, procedures, and/or methods described in the disclosure. The layers of the radio interface protocol may be implemented in the processor 1020. The processor 1020 may include an application-specific integrated circuit (ASIC), other chipsets, logic circuits, and/or data processing devices. The processor 1020 may be an application processor (AP). The processor 1020 may include at least one of a digital signal processor (DSP), a central processing unit (CPU), a graphics processing unit (GPU), and a modulator and demodulator (MODEM). For example, the processor 1020 may be SNAPDRAGON™ series of processors made by Qualcomm®, EXYNOS™ series of processors made by Samsung®, A series of processors made by Apple®, HELIO™ series of processors made by MediaTek®, ATOM™ series of processors made by Intel®, KIRIN™ series of processors made by HiSilicon®, or the corresponding next-generation processors.

The power management module 1091 manages a power for the processor 1020 and/or the transceiver 1031. The battery 1092 supplies power to the power management module 1091. The display 1041 outputs the result processed by the processor 1020. The input unit 1053 may be an individual circuit that receives an input from a user or other devices and convey the received input with associated information to the processor 1020. However, the embodiments are not limited thereto. For example, the input unit 1053 may be implemented as at least one of touch keys or buttons to be displayed on the display 1041 when the display 1041 is capable of sensing touches, generating related signals according to the sensed touches, and transferring the signals to the processor 1020. The SIM card is an integrated circuit used to securely store international mobile subscriber identity (IMSI) used for identifying a subscriber in a mobile telephoning apparatus such as a mobile phone and a computer and the related key. Many types of contact address information may be stored in the SIM card.

The memory 1010 is coupled with the processor 1020 in a way to operate and stores various types of information to operate the processor 1020. The memory may include read-only memory (ROM), random access memory (RAM), flash memory, a memory card, a storage medium, and/or other storage device. The embodiments described in the disclosure may be implemented as software program or application. In this case, such software program or application may be stored in the memory 1010. In response to a predetermined event, the software program or application stored in the memory 1010 may be fetched and executed by the processor 1020 for performing the function and the method described in this disclosure. The memory may be implemented inside of the processor 1020. Alternatively, the memory 1010 may be implemented outside of the processor 1020 and may be connected to the processor 1020 in communicative connection through various means which is well-known in the art.

The transceiver 1031 is connected to the processor 1020, receives, and transmits a radio signal under control of the processor 1020. The transceiver 1031 includes a transmitter and a receiver. The transceiver 1031 may include a baseband circuit to process a radio frequency signal. The transceiver controls one or more antennas to transmit and/or receive a radio signal. In order to initiate a communication, the processor 1020 transfers command information to the transceiver 1031 to transmit a radio signal that configures a voice communication data. The antenna functions to transmit and receive a radio signal. When receiving a radio signal, the transceiver 1031 may transfer a signal to be processed by the processor 1020 and transform a signal in baseband. The processed signal may be transformed into audible or readable information output through the speaker 1042.

The speaker 1042 outputs a sound related result processed by the processor 1020. The microphone 1052 receives audio input to be used by the processor 1020.

A user inputs command information like a phone number by pushing (or touching) a button of the input unit 1053 or a voice activation using the microphone 1052. The processor 1020 processes to perform a proper function such as receiving the command information, calling a call number, and the like. An operational data on driving may be extracted from the SIM card or the memory 1010. Furthermore, the processor 1020 may display the command information or driving information on the display 1041 for a user's recognition or for convenience.

**FIG. 11 is a block diagram of a processor in accordance with an embodiment.**

Referring to FIG. 11, a processor 1020 may include a plurality of circuits to implement the proposed functions, procedures and/or methods described herein. For example, the processor 1020 may include a first circuit 1020-1, a second circuit 1020-2, and a third circuit 1020-3. Also, although not shown, the processor 1020 may include more circuits. Each circuit may include a plurality of transistors.

The processor 1020 may be referred to as an application-specific integrated circuit (ASIC) or an application processor (AP) and may include at least one of a digital signal processor (DSP), a central processing unit (CPU), and a graphics processing unit (GPU).

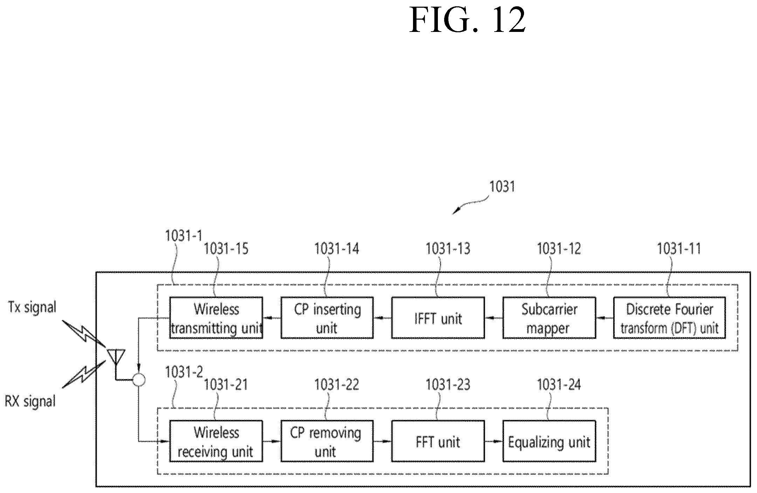

**FIG. 12 is a detailed block diagram of a transceiver of a first apparatus shown in FIG. 9 or a transceiving unit of an apparatus shown in FIG. 10.**

Referring to FIG. 12, the transceiving unit 1031 (e.g., transceiving circuit) includes a transmitter 1031-1 and a receiver 1031-2. The transmitter 1031-1 includes a discrete Fourier transform (DFT) unit 1031-11 (e.g., DFT circuit), a subcarrier mapper 1031-12 (e.g., subcarrier mapping circuit), an IFFT unit 1031-13 (e.g., IFFT circuit), a cyclic prefix (CP) insertion unit 1031-14 (e.g., CP insertion circuit), and a wireless transmitting unit 1031-15 (e.g., wireless transmitting circuit). The transmitter 1031-1 may further include a modulator. Further, the transmitter 1031-1 may for example include a scramble unit (e.g., scrambling circuit), a modulation mapper, a layer mapper, and a layer permutator, which may be disposed before the DFT unit 1031-11. That is, to prevent a peak-to-average power ratio (PAPR) from increasing, the transmitter 1031-1 subjects information to the DFT unit 1031-11 before mapping a signal to a subcarrier. The signal spread (or pre-coded) by the DFT unit 1031-11 is mapped onto a subcarrier by the subcarrier mapper 1031-12 and made into a signal on the time axis through the IFFT unit 1031-13. Some of constituent elements is referred to as a unit in the disclosure. However, the embodiments are not limited thereto. For example, such term "unit" is also referred to as a circuit block, a circuit, or a circuit module.

The DFT unit 1031-11 performs DFT on input symbols to output complex-valued symbols. For example, when Ntx symbols are input (here, Ntx is a natural number), DFT has a size of Ntx. The DFT unit 1031-11 may be referred to as a transform precoder. The subcarrier mapper 1031-12 maps the complex-valued symbols onto respective subcarriers in the frequency domain. The complex-valued symbols may be mapped onto resource elements corresponding to resource blocks allocated for data transmission. The subcarrier mapper 1031-12 may be referred to as a resource element mapper. The IFFT unit 1031-13 performs IFFT on the input symbols to output a baseband signal for data as a signal in the time domain. The CP inserting unit 1031-14 copies latter part of the baseband signal for data and inserts the latter part in front of the baseband signal for data. CP insertion prevents inter-symbol interference (ISI) and inter-carrier interference (ICI), thereby maintaining orthogonality even in a multipath channel.

On the other hand, the receiver 1031-2 includes a wireless receiving unit 1031-21 (e.g., wireless receiving circuit), a CP removing unit 1031-22 (e.g., CP removing circuit), an FFT unit 1031-23 (e.g., FFT circuit), and an equalizing unit 1031-24 (e.g., equalizing circuit). The wireless receiving unit 1031-21, the CP removing unit 1031-22, and the FFT unit 1031-23 of the receiver 1031-2 perform reverse functions of the wireless transmitting unit 1031-15, the CP inserting unit 1031-14, and the IFFT unit 1031-13 of the transmitter 1031-1. The receiver 1031-2 may further include a demodulator.

According to the embodiments of the disclosure, an NB-IoT terminal in a wireless communication system may effectively receive emergency/warning/alert messages via a Non-Terrestrial Network (NTN) or a Terrestrial Network (TN).

Although the preferred embodiments of the disclosure have been illustratively described, the scope of the disclosure is not limited to only the specific embodiments, and the disclosure can be modified, changed, or improved in various forms within the spirit of the disclosure and within a category written in the claim.

In the above exemplary systems, although the methods have been described in the form of a series of steps or blocks, the disclosure is not limited to the sequence of the steps, and some of the steps may be performed in different order from other or may be performed simultaneously with other steps. Further, those skilled in the art will understand that the steps shown in the flowcharts are not exclusive and may include other steps or one or more steps of the flowcharts may be deleted without affecting the scope of the disclosure.

Claims of the present disclosure may be combined in various manners. For example, technical features of the method claim of the present disclosure may be combined to implement a device, and technical features of the device claim of the present disclosure may be combined to implement a method. In addition, the technical features of the method claim and the technical features of the device claim of the present disclosure may be combined to implement a device, and technical features of the method claim and the technical features of the device claim of the present disclosure may be combined to implement a method.

**Claims**

1. A method for operating a Narrowband-Internet of Things (NB-IoT) terminal in a wireless communication system, the method comprising:

   receiving an NB-IoT system information block type1;
   after receiving the NB-IoT system information block type1, receiving at least one NB-IoT system information block type including Earthquake and Tsunami Warning System (ETWS) notification information; and
   forwarding at least a part of the ETWS notification information to an upper layer,
   wherein the ETWS notification information includes warning area coordinates information.

2. The method of claim 1, wherein the at least one NB-IoT system information block type includes i) a first NB-IoT system information block type for an ETWS primary notification and ii) a second NB-IoT system information block type for an ETWS secondary notification.

3. The method of claim 1, wherein terminal capability information associated with the reception of the ETWS notification information is indicated to a network, and
   the terminal capability information includes support for Non-Terrestrial Network (NTN) access.

4. The method of claim 3, wherein the terminal capability information is defined separately from an optional feature without a terminal radio access capability parameter.

5. The method of claim 2, wherein the NB-IoT system information block type1 includes scheduling information indicating that the at least one specific NB-IoT system information block type is present,
   the method further comprising:
   immediately starting acquisition of at least one of i) the first NB-IoT system information block type and ii) the second NB-IoT system information block type based on the scheduling information.

6. The method of claim 2, wherein the warning area coordinates information corresponds to a warning area coordinates segment included in the second NB-IoT system information block type, and
   the warning area coordinates segment is used for assembly.

7. The method of claim 6, wherein, when complete warning area coordinates are not assembled within a 3-hour period, the warning area coordinates segment is discarded.

8. A Narrowband-Internet of Things (NB-IoT) terminal in a wireless communication system, comprising:

at least one processor; and
at least one memory configured to store instructions and operably electrically connectable to the at least one processor,
wherein operations performed based on the instructions executed by the at least one processor comprise:

receiving an NB-IoT system information block type1;
after receiving the NB-IoT system information block type1, receiving at least one NB-IoT system information block type including Earthquake and Tsunami Warning System (ETWS) notification information; and
forwarding at least a part of the ETWS notification information to an upper layer,
wherein the ETWS notification information includes warning area coordinates information.

9. The NB-IoT terminal of claim 8, wherein the at least one specific NB-IoT system information block type includes i) a first NB-IoT system information block type for an ETWS primary notification and ii) a second NB-IoT system information block type for an ETWS secondary notification.

10. The NB-IoT terminal of claim 8, wherein terminal capability information associated with the reception of the ETWS notification information is indicated to a network, and
the terminal capability information includes support for Non-Terrestrial Network (NTN) access.

11. The NB-IoT terminal of claim 10, wherein the terminal capability information is defined separately from an optional feature without a terminal radio access capability parameter.

12. The NB-IoT terminal of claim 9, wherein the NB-IoT system information block type1 includes scheduling information indicating that the at least one NB-IoT system information block type is present, and
wherein the operations performed based on the instructions executed by the at least one processor comprise:
immediately starting acquisition of at least one of i) the first NB-IoT system information block type and ii) the second NB-IoT system information block type based on the scheduling information.

13. The NB-IoT terminal of claim 9, wherein the warning area coordinates information corresponds to a warning area coordinates segment included in the second NB-IoT system information block type, and
the warning area coordinates segment is used for assembly.

14. The NB-IoT terminal of claim 13, wherein, when complete warning area coordinates are not assembled within a 3-hour period, the warning area coordinates segment is discarded.

# FIG. 1

# FIG. 2

... | One Frame (10ms) | ...

... | Half-Frame (5ms) | Half-Frame (5ms) | ...

... | Subframe 0 (1ms) | ... | Subframe 4 (1ms) | Subframe 5 (1ms) | ... | Subframe 9 (1ms) | ...

Subframe (1ms)

15KHz | Slot 0 (14symbols)

1ms

30KHz | Slot 0 (14symbols) | Slot 1

500us

60KHz | Slot 0 (14symbols) | Slot 1 | Slot 2 | Slot 3

250us

120KHz | Slot 0 (14symbols) | Slot 1 | Slot 2 | Slot 3 | Slot 4 | Slot 5 | Slot 6 | Slot 7

125us

# FIG. 3A

# FIG. 3B

# FIG. 3C

# FIG. 4

# FIG. 5

# FIG. 6

# FIG. 7

MME/S-GW

S1

eNB

NTN Gateway

feeder link

NTN payload

Uu

service link

# FIG. 8

START

Receive NB-IoT System Information Block Type1 — S801

Receive at least one specific NB-IoT system information block type including ETWS notification information — S802

Forward at least a part of the ETWS notification information to an upper layer — S803

END

# FIG. 9

1036a
1036b

100a
100b

1020b

First apparatus
Second apparatus

1020a — Processor | Transceiver
Processor | Transceiver

Memory
Memory

1010a 1031a
1010b 1031b

# FIG. 10

# FIG. 11

# FIG. 12

EP 4 718 883 A1

1031

Tx signal

RX signal

1031-1
1031-15 | Wireless transmitting unit
1031-14 | CP inserting unit
1031-13 | IFFT unit
1031-12 | Subcarrier mapper
1031-11 | Discrete Fourier transform (DFT) unit

1031-2
1031-21 | Wireless receiving unit
1031-22 | CP removing unit
1031-23 | FFT unit
1031-24 | Equalizing unit

Europäisches
Patentamt

European
Patent Office

Office européen
des brevets

## EUROPEAN SEARCH REPORT

**Application Number**

EP 25 20 4373

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/360962 A1 (TSENG YUNG-LAN [TW] ET AL) 10 November 2022 (2022-11-10) * paragraphs [0075] - [0154], [0216] - [0233] * | 1-14 | INV. H04W4/02 H04W4/70 H04W4/90 H04W84/06 |
| | ----- | | |
| A | US 2023/077415 A1 (BERGSTRÖM MATTIAS [SE] ET AL) 16 March 2023 (2023-03-16) * paragraphs [0002] - [0066]; figures 1, 3 * | 1-14 | |
| | ----- | | |
| A | EP 3 549 370 B1 (LG ELECTRONICS INC [KR]) 27 October 2021 (2021-10-27) * paragraphs [0042] - [0111]; figures 5, 8 * | 3-5, 10-12 | |
| | ----- | | |

**TECHNICAL FIELDS SEARCHED (IPC)**

H04W

The present search report has been drawn up for all claims

| Place of search | Date of completion of the search | Examiner |
|---|---|---|
| The Hague | 11 December 2025 | Sager, Bernard |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                                     

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 20 4373

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2025

| Patent document cited in search report | Publication date | Patent family member(s) | | Publication date |
|---|---|---|---|---|
| US 2022360962 A1 | 10-11-2022 | NONE | | |
| US 2023077415 A1 | 16-03-2023 | BR | 112020023930 A2 | 09-02-2021 |
| | | CN | 112400332 A | 23-02-2021 |
| | | CO | 2020014595 A2 | 10-12-2020 |
| | | EP | 3821628 A1 | 19-05-2021 |
| | | EP | 4199561 A1 | 21-06-2023 |
| | | JP | 7147037 B2 | 04-10-2022 |
| | | JP | 7381646 B2 | 15-11-2023 |
| | | JP | 2021530903 A | 11-11-2021 |
| | | JP | 2022106794 A | 20-07-2022 |
| | | US | 2021274334 A1 | 02-09-2021 |
| | | US | 2023077415 A1 | 16-03-2023 |
| | | WO | 2020013749 A1 | 16-01-2020 |
| EP 3549370 B1 | 27-10-2021 | EP | 3549370 A1 | 09-10-2019 |
| | | US | 2019349842 A1 | 14-11-2019 |
| | | WO | 2018105899 A1 | 14-06-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240131174

- KR 1020250126771